# EUROPEAN PATENT SPECIFICATION

(11) **EP 3 089 027 B1**
(45) Date of publication and mention of the grant of the patent: **04.08.2021**
(21) Application number: 16160320.4
(22) Date of filing: 15.03.2016
(51) Int. Cl.: G06F 9/38, G06F 15/80

(54) **SIMD PROCESSING MODULE**
SIMD-VERARBEITUNGSMODUL
MODULE DE TRAITEMENT SIMD

(30) Priority: 25.03.2015 GB 201505053
(43) Date of publication of application: 02.11.2016
(73) Proprietor: Nordic Semiconductor ASA, 7052 Trondheim (NO)
(72) Inventor: Murrin, Paul, Chepstow, NP16 5PB (GB); Anderson, Adrian, Chepstow, NP16 5PB (GB); Davies, Gareth, Kings Langley, Hertfordshire WD4 8LZ (GB)
(74) Representative: Dehns

(56) References cited:
- EP-A1- 1 873 627
- WO-A1-2010/051167
- WO-A1-2011/049631
- WO-A1-2013/058696
- US-A- 5 887 183
- US-A1- 2008 091 924
- US-A1- 2011 145 543

## Description

### Background

Single Instruction Multiple Data (SIMD) processing allows a single instruction to be executed on multiple data items in parallel, i.e. simultaneously. SIMD processing can be faster than Single Instruction Single Data (SISD) processing if the same instruction is to be applied to multiple data items. For example, if an instruction (e.g. an Add instruction) is to be executed on the data items of a vector then a SIMD processing module can execute the instruction on multiple data items from the vector in parallel. Therefore, SIMD processing modules can be used for vector processing. Some examples of uses of SIMD processing modules are in graphics processing systems, image processing systems (including video processing systems), and signal processing systems such as systems implementing Digital Signal Processing (DSP), e.g. for use in MIMO systems or wireless LAN systems to give some examples.

As an example, a SIMD processing module may include an n-way vector processing unit which can execute an instruction on n data items of a vector in parallel. For example, a 4-way vector processing unit can execute an instruction on four data items at a time, and then repeat the execution of the instruction for the next four data items of a vector, and so on until the instruction has been executed on all of the data items of the vector. A wider vector processing unit (i.e. a vector unit with a greater value of n) can execute an instruction on a larger number of data items in parallel, so it may execute an instruction on a vector of data items faster (i.e. in fewer cycles) than a narrower vector processing unit. Therefore, in some implementations, a wider vector processing unit (e.g. a 16-way vector processing unit) may be preferable to a narrower vector processing unit (e.g. a 4-way vector processing unit). However, a wider vector processing unit takes up more space (e.g. area) on a chip, and may be more expensive to manufacture. Furthermore, there may be times when the full width of a wide vector processing unit cannot be utilised (e.g. for processing a vector of four data items, an 8-way vector processing unit is only half-utilised), so the efficiency gain of wider vector processing units may be less than one might otherwise expect. Furthermore, wide vector processing units may cause a routing problem when implemented on a chip because each way of the vector processing unit needs access to a set of registers of the SIMD processing module which are used to transfer data between the SIMD processing module and a memory. So, for the reasons given above, a narrower vector processing unit (e.g. a 4-way vector processing unit) may be preferable to a wider vector processing unit (e.g. a 16-way vector processing unit) in some implementations. Therefore, the width of the vector processing unit that is implemented in a SIMD processing module can be chosen depending upon the system in which the SIMD processing module is implemented in, and the requirements of that system.

Instructions to be executed by a SIMD processing module (i.e. SIMD instructions) may be written in a low level language, such as assembly language, to increase the speed with which the instructions can be executed (compared to using instructions written in higher level programming languages, such as C). Assembly language instructions have a strong (e.g. one-to-one) correspondence with the system's machine code instructions, so the assembly language instructions can be assembled into machine code (e.g. in binary form) in a simple and efficient manner. For example, computer systems which are used for processing real-time data (e.g. signal processing systems which are receiving signals, e.g. phone signals, TV signals or other signals which are to be outputted in real-time), may use assembly language instructions rather than higher level instructions because the efficiency of the computer system is important. That is, the computer systems need to be able to process the incoming data in real-time. The assembly language is specific to the computer architecture on which the instructions are to be executed, so the assembly language instructions may be different if they are to be executed by different computer architectures. In particular, the structure of a SIMD processing module (e.g. the width of a vector processing unit within the SIMD processing module) would affect the form of the assembly language instructions which are to be executed by the SIMD processing module. For example, an instruction may be arranged to be executed by an n-way vector processing unit, whereby it is implicit in the instruction that it is performed on n data items of a vector (e.g. data items 0 to n-1) and then the execution of the instruction is repeated for the next n data items (e.g. data items n to 2n-1), and so on until the instruction has been executed on all of the data items of the vector.

For example, an instruction for loading a vector from memory into a register may be written in assembly language for execution by a 4-way vector processing unit as:
Load_{IMM4} DP 0 AP 0 INC_P 4
where LoadIMM4 is an instruction for the vector processing unit to load four data items from memory, AP0 is an address pointer register indicating the location of the vector in the memory, DP0 indicates the first of a sequence of registers to which the vector is to be loaded, and INC_P4 is an indication that the address pointer is to be incremented by four positions when the instruction is repeated for the next four data items of the vector. This instruction is arranged to be executed on a 4-way vector processing unit in the sense that four data items are loaded in a first cycle and the instruction is then repeated for the next four data items of a vector on the next cycle. The instruction would be changed if it was going to be executed by a vector processing unit of a different width, e.g. by an 8-way vector processing unit.

It can therefore be appreciated that there may be little or no flexibility in the choice of the width of a vector processing unit that is used to execute a particular SIMD instruction because the instruction may be arranged to be executed by a vector processing unit having a particular width. Therefore, as an example, if code is written in terms of instructions which are arranged to be executed by a SIMD processing module including a 4-way vector processing unit then it would not be possible to execute that code using a wider vector processing unit to increase the number of data items that are processed in parallel.

WO 2010/051167 A1, 'Dynamically-Selectable Vector Register Partitioning', discloses a method of dynamically-selectable vector register partitioning, and more specifically a processor infrastructure (e.g., co-processor infrastructure in a multi-processor system) that supports dynamic setting of vector register partitioning to any of a plurality of different vector partitioning modes. Rather than being restricted to a fixed vector register partitioning mode, a processor is dynamically set to any of a plurality of different vector partitioning modes. Different vector register partitioning modes are employed for different applications being executed by the processor, and different vector register partitioning modes are employed for use in processing different vector oriented operations within a given applications being executed by the processor.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a SIMD processing module according to claim 1.

There is provided a method according to claim 13.

There is provided a computer readable storage medium according to claim 14.

Any of the SIMD processing modules described herein may be embodied in hardware on an integrated circuit. Computer readable code may be provided for generating a SIMD processing module according to any of the examples described herein. The computer readable code may be encoded on a computer readable storage medium.

The above features may be combined as appropriate, as would be apparent to a skilled person, and may be combined with any of the aspects of the examples described herein.

### Brief Description of the Drawings

Examples will now be described in detail with reference to the accompanying drawings in which:
Figure 1 is a schematic diagram of a system including a SIMD processing module;
Figure 2 shows a flow chart illustrating a method of executing a set of one or more instructions on one or more vectors using a plurality of vector processing units of the SIMD processing module;
Figure 3 illustrates data items of vectors on which instructions can be executed by different vector processing units of the SIMD processing module;
Figure 4 is a schematic diagram of a computer system including the SIMD processing module; and
Figure 5 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### Detailed Description

Embodiments will now be described by way of example only.

In examples described herein, a SIMD processing module comprises multiple vector processing units, which can be used to execute an instruction on respective parts of a vector. That is, in examples described herein, each of a plurality of vector processing units can execute an instruction on a respective part of a vector, whereby collectively the plurality of vector processing units cause the instruction to be executed on all of the data items of the vector. A vector position indication is determined for each of the plurality of vector processing units to indicate which part of the vector that vector processing unit is to execute the instruction on. For example, a vector position indication may indicate a starting position of a subvector on which the corresponding vector processing unit is to execute the instruction. In this way the vector may be conceptually divided into subvectors with the respective vector processing units executing the instruction on the respective subvectors in parallel. Each vector processing unit can then execute the instruction as intended, but only on a subsection of the whole vector. For example, an instruction that is written for execution on a 4-way vector processing unit can be executed by multiple 4-way vector processing units, each starting at different points within the vector. In this way the instruction can be executed on more than four of the data items of the vector in parallel even though the instruction is written to be executed on four data items in parallel by a 4-way vector processing unit. Therefore, as an example, N vector processing units of a SIMD processing module can be used (where each of the N vector processing units is an n-way vector processing unit) to execute an instruction that is written for execution by an n-way vector processing unit on Nxn data items of the vector in parallel (i.e. simultaneously).

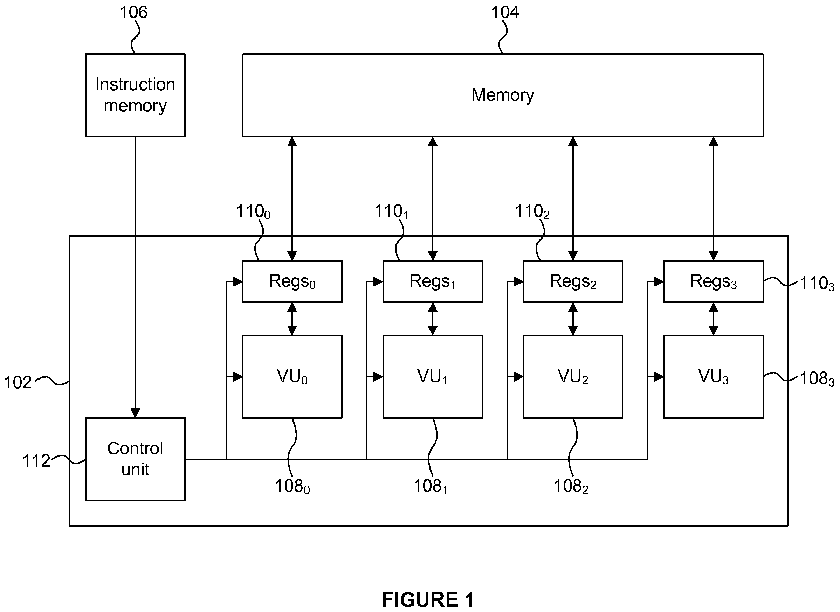

Figure 1 shows a system including a SIMD processing module 102 which is coupled to a memory 104 and an instruction memory 106. The memory 104 and the instruction memory 106 may, for example, be implemented as Random Access Memory (RAM). The memory 104 is arranged to store data, e.g. vectors, on which the SIMD processing module 102 can execute instructions. The instruction memory 106 is arranged to store instructions, e.g. in assembly language, which are to be executed by the SIMD processing module 102 on data from the memory 104. Although Figure 1 shows the instruction memory 106 being separate to the memory 104, in some examples the instruction memory 106 could be implemented as part of the memory 104. The SIMD processing module 102 is configured to execute SIMD instructions on data items. In particular, the SIMD processing module 102 comprises a set of vector processing units ("VUs") 108₀ to 108₃. In the example shown in Figure 1 there are four vector processing units 108o to 108₃, but in general there may be N vector processing units (108₀ to 108_{N-1}) in the SIMD processing module 102. Each of the vector processing units 108 is an n-way vector processing unit. For example, n may be 4, 8 or 16, or any other suitable value. The SIMD processing module 102 comprises a respective set of registers (110₀ to 110₃) for each of the vector processing units (108₀ to 108₃). Each vector processing unit 108 is arranged to transfer data to and from the memory 104 via its respective set of registers 110. The SIMD processing module 102 also comprises a control unit 112. The control unit 112 is arranged to receive instructions (e.g. SIMD instructions) from the instruction memory 106 and to control operation of the vector processing units 108 and the sets of registers 110, such that the instructions are run on the multiple vector processing units 108. The control unit 112 may be implemented in hardware, software or firmware.

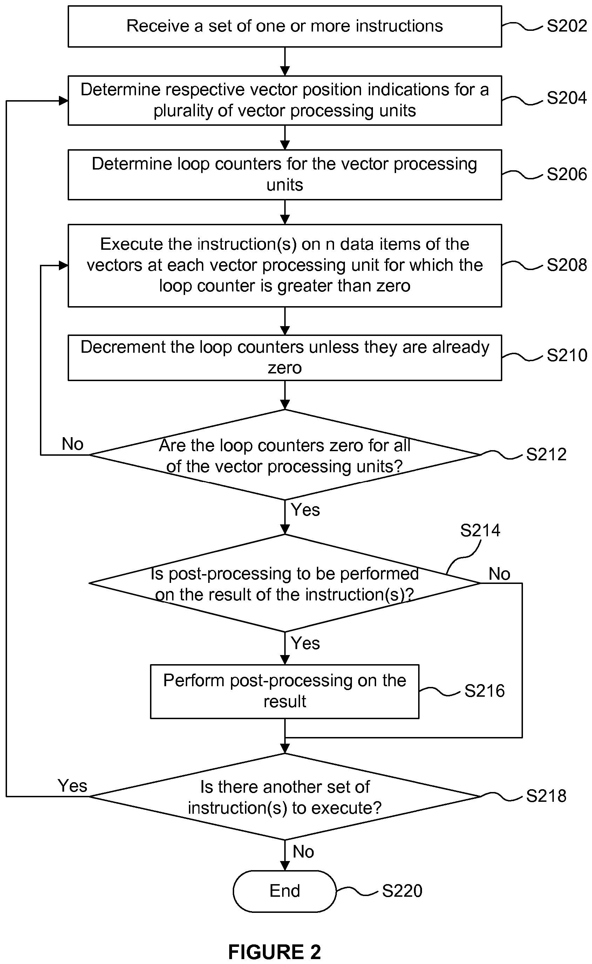

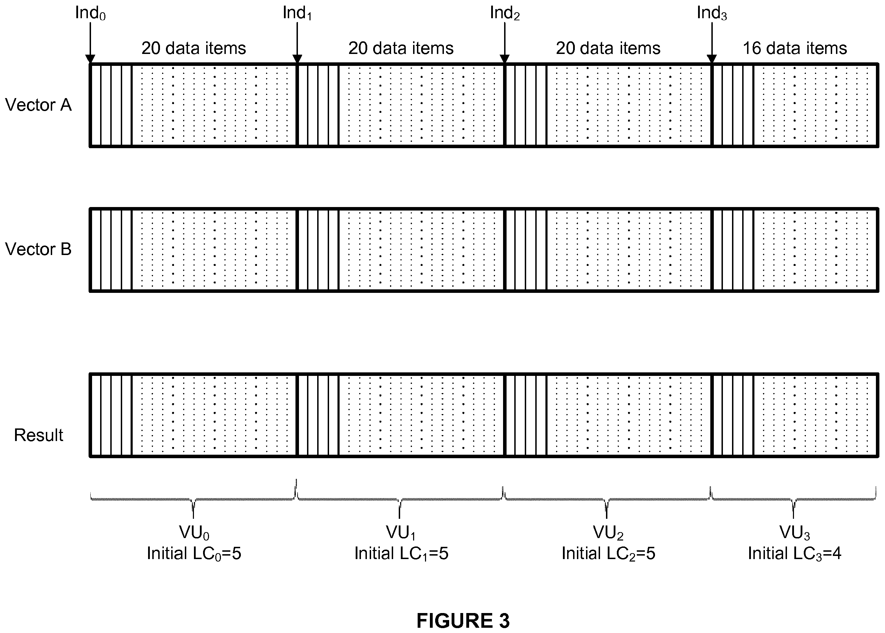

Operation of the system shown in Figure 1 is described with reference to the flow chart shown in Figure 2 and the example vectors shown in Figure 3.

In step S202 the control unit 112 receives, from the instruction memory 106, a set of one or more instructions to be executed on one or more vectors. The set of one or more instructions form an operation to be performed on the one or more vectors. For example, the operation may be to add two vectors together. This operation may include four instructions excluding any required for setup and control: (i) a first load instruction to load the data items of the first vector ("vector A") into registers of the sets of the registers 110, (ii) a second load instruction to load the data items of the second vector ("vector B") into different registers of the sets of registers 110, (iii) an add instruction to add the data items from the corresponding registers together, and (iv) a store instruction to store the results back to memory. The instructions are arranged to be executed by n-way vector processing units, such that each of the n-way vector processing units executes the instructions on n data items of the vectors and then executes the instructions on the next n data items of the vectors.

Figure 3 shows an example of two vectors ("Vector A" and "Vector B") on which instructions (e.g. load and add instructions) are executed. Figure 3 also shows a third vector ("Result") which is the result of executing the instructions on vectors A and B. In the example shown in Figure 3, each of the vectors includes 76 data items, and the SIMD processing module 102 comprises four vector processing units 108₀ to 108₃, and each of the vector processing units is a 4-way vector processing unit. Each of the data items includes one or more bits of data, e.g. each data item may include 8, 16, 32 or 64 bits of data or any other suitable number of bits of data, depending on the type of data the data items represent.

In step S204 the control unit 112 determines a respective vector position indication for each of a plurality of the vector processing units 108. Each of the vector position indications indicates a position (e.g. a starting position) of a part of the vectors on which the corresponding vector processing unit is to execute the instructions. For example, the parts of the vectors on which the vector processing units are to execute the instructions may be sections (i.e. "subvectors") within the vectors, whereby the vector position indications indicate the positions of the subvectors within the vectors. In the example, shown in Figure 3, the vector position indications are labelled "Ind₀", "Ind₁", "Ind₂" and "Ind₃", and they indicate starting positions of the subvectors within the vectors which are to be processed by the respective vector processing units 108₀ to 108₃. The control unit 112 can determine the positions of the different subvectors within the vectors based on the length of the vectors and the number of vector processing units that are going to process the parts of the vectors. In the example shown in Figure 3 the vectors include 76 data items and four vector processing units are going to process the respective four parts of the vectors. Preferably, the control unit 112 determines the positions of the parts within the vectors such that the parts are approximately the same size, i.e. such that differences in the sizes of the different parts do not exceed the widths of the vector processing units. This means that the work involved in executing the instructions on the vectors is shared approximately equally between the different vector processing units. In the example shown in Figure 3, the first subvector comprises data items 0 to 19 of the vectors, the second subvector comprises data items 20 to 39, the third subvector comprises data items 40 to 59, and the fourth subvector comprises data items 60 to 75.

In Figure 3 the vectors include 76 data items, and the vector processing units 108₀ to 108₃ are each 4-way vector processing units, i.e. n=4. The control unit 112 determines the vector position indications such that each part includes a multiple of n (i.e. a multiple of 4 in this example) data items (although it is noted that in other examples some of the parts might include a number of data items which is not a multiple of n). In the example shown in Figure 3, the control unit 112 determines the vector position indications as Ind₀=0, Ind₁=20, Ind₂=40 and Ind₃=60, such that the first three parts each include 20 data items and the fourth part includes 16 data items. Each of the four vector processing units 108₀ to 108₃ is arranged to execute instructions in parallel on four data items from its respective part. For example, in a first cycle, a first vector processing unit (VU₀) is arranged to execute instructions on the first four data items (e.g. data items 0 to 3) of the vectors A and B to determine the first four data items of the Result vector. At the same time, a second vector processing unit (VU₁) is arranged to execute instructions on the first four data items following the Ind₁ position indication (e.g. data items 20 to 23) of the vectors A and B to determine the corresponding data items of the Result vector. At the same time, a third vector processing unit (VU₂) is arranged to execute instructions on the first four data items following the Ind₂ position indication (e.g. data items 40 to 43) of the vectors A and B to determine the corresponding data items of the Result vector. At the same time, a fourth vector processing unit (VU₃) is arranged to execute instructions on the first four data items following the Ind₃ position indication (e.g. data items 60 to 63) of the vectors A and B to determine the corresponding data items of the Result vector.

In step S206 the control unit 112 determines a respective loop counter for each of the vector processing units which indicates the number of cycles that the respective vector processing unit is to perform in order to execute the instructions on the corresponding part of the vectors. In the example shown in Figure 3, the first three vector processing units 108₀ to 108₂ will each process twenty data items, with four data items being processed in each cycle, so each vector processing unit will need to perform five cycles. Therefore, the loop counters for these three vector processing units (108₀ to 108₂) are initially set to five. This is indicated in Figure 3, which shows "Initial LC₀=5", "Initial LC₁=5" and "Initial LC₂=5". However, the fourth vector processing unit 108₃ will process sixteen data items, with four data items being processed in each cycle, so the fourth vector processing unit 108₃ will need to perform four cycles. Therefore, the loop counter for the fourth vector processing unit 108₃ is initially set to four. This is indicated in Figure 3 which shows "Initial LC₃=4".

The control unit 112 causes the vector processing units 108 to execute the instructions on the respective subvectors of the vectors in accordance with the vector position indications. In particular, the control unit 112 can initialise the respective set of registers 110 for each of the vector processing units 108 in accordance with the respective vector position indications (Ind₀ to Ind₃), so that data items from the different subvectors are provided to the correct vector processing units 108. For example, the control unit 112 can initialise the first set of registers 110₀ such that the vector processing unit 108₀ starts execution at the first data item (data item 0) in accordance with the vector position indication Ind₀; the control unit 112 can initialise the second set of registers 110₁ such that the vector processing unit 108₁ starts execution at data item 20 in accordance with the vector position indication Ind₁; the control unit 112 can initialise the third set of registers 110₂ such that the vector processing unit 108₂ starts execution at data item 40 in accordance with the vector position indication Ind₂; and the control unit 112 can initialise the fourth set of registers 110₃ such that the vector processing unit 108₃ starts execution at data item 60 in accordance with the vector position indication Ind₃.

In step S208 the control unit 112 causes the vector processing units 108₀ to 108₃ to execute the instructions on n data items (e.g. on four data items) of the vectors at vector processing units 108 for which the loop counter is greater than zero. As mentioned above, each vector processing unit 108 will start at different positions within the vectors in accordance with the vector position indications (Ind₀ to Ind₃) so as to execute the instructions on the appropriate subvectors. In this way, in the example shown in Figure 3, the instructions can be executed on sixteen data items from the vectors in parallel, using four 4-way vector processing units 108.

As described above, an operation may include a set of one or more instructions which are to be executed on the data items of the vectors. For example, an addition operation may include four instructions which are to be executed: a first load instruction to load n data items of vector A into registers of the appropriate set of registers 110; a second load instruction to load n data items of vector B into registers of the appropriate set of registers 110; an addition instruction to add the n loaded data items of vectors A and B together to determine the n data items of the result vector which can be stored in suitable registers of the appropriate set of registers 110; and a store instruction to store the results back to memory 104.

As described above, the instructions may be assembly language instructions, wherein the assembly language is specific to the computer architecture on which the instructions are to be executed. For example, the instructions may be arranged to be executed by n-way vector processing units, e.g. where n=4 in the examples shown in the figures. So the instructions are suitable to be executed by each of the vector processing units 108₀ to 108₃ since they are 4-way vector processing units in this example. So, in this example, in a first cycle, each of the vector processing units 108 loads four data items (shown with solid lines in Figure 3) from vectors A and B starting from the respective positions indicated by the respective vector position indications Ind₀ to Ind₃, and then adds those four data items together and stores the resulting data items to represent the appropriate data items of the Result vector.

In step S210, each of the vector processing units 108 decrements its loop counter when it has finished executing the instructions on the four data items of the current cycle. Therefore, after the first cycle, the loop counters (LC₀, LC₁ and LC₂) of the vector processing units 108₀, 108₁ and 108₂ are decremented to have a value of 4, and the loop counter LC₃ of the vector processing unit 108₃ is decremented to have a value of 3.

Then in step S212 the control unit 112 determines whether all of the loop counters are zero. If not, the method passes back to step S208 wherein the execution of the instructions is repeated for the next four data items for each of the vector processing units 108 in the next cycle. Therefore, in the second cycle, the first vector processing unit 108₀ executes the instructions on data items 4 to 7 of the vectors, the second vector processing unit 108₁ executes the instructions on data items 24 to 27 of the vectors, the third vector processing unit 108₂ executes the instructions on data items 44 to 47 of the vectors, and the fourth vector processing unit 108₃ executes the instructions on data items 64 to 67 of the vectors.

It is implicit in the instructions that they are to be executed on n data items of a vector at a time (e.g. for data items 0 to 3, where n=4 in the example shown in Figure 3) and then the execution of the instructions is repeated for the next n data items (e.g. for data items 4 to 7, where n=4), and so on until the instruction has been executed on all of the data items of the vector. For example, as described above, an instruction for loading a vector from memory into a register may be written in assembly language for execution by a 4-way vector processing unit as:
Load_{IMM4} DP0 AP0 INC_P4
where Load_{IMM4} is an instruction for the vector processing unit to load four data items from memory, AP0 is an address pointer indicating the location of the vector in the memory, DP0 indicates the first of a sequence of registers 110 to which the vector is to be loaded, and INC_P4 is an indication that the address pointer is to be incremented by four positions when the instruction is repeated for the next four data items of the vector. This instruction is arranged to be executed on a 4-way vector processing unit in the sense that four data items are loaded in a first cycle and the instruction is then repeated for the next four data items of a vector on the next cycle. However, in examples described herein, multiple 4-way vector processing units can execute this instruction concurrently such that the instruction can be executed on more than four data items in each cycle. This is achieved even though the instructions are implicitly arranged to be executed by an n-way vector processing unit, by setting different starting vector positions for the different vector processing units such that the vector processing units execute the instructions on respective subvectors of the vectors.

The method continues to repeat the execution of the instructions on the different data items of the subvectors at the respective vector processing units 108, wherein on each cycle, steps S208, S210 and S212 are performed. On the fourth cycle, in step S212, the control unit 112 determines that the loop counter for the fourth vector processing unit 108₃ is zero (i.e. LC₃=0), but that the other loop counters are not zero. Therefore, the method will repeat again by passing back to step S208 to perform a fifth cycle. In the fifth cycle, the loop counter for vector processing unit 108₃ is zero, so the vector processing unit 108₃ does not execute the instructions on any more data items in step S208 (it has already executed the instructions on all of the data items in its subvector, i.e. on data items 60 to 75), and its loop counter (LC₃) is not further decremented in step S210 (because it is already zero). However, on the fifth cycle, the other vector processing units (108₀ to 108₂) continue to execute the instructions on data items from their respective subvectors in step S208 and their loop counters are decremented to zero in step S210.

Therefore, on the fifth cycle, in step S212 it is determined that the loop counters are zero for all of the vector processing units 108, i.e. LC₀=LC₁=LC₂=LC₃=0. The method then passes to step S214.

In step S214 the control unit 112 determines whether any post-processing is to be performed on the result of the instructions, i.e. on the "Result" vector shown in Figure 3. Some operations do not require post-processing. For example, an operation to add a constant value onto all of the data items of a vector (which can be useful, e.g. to uniformly increase a signal value, or to increase the brightness of an image) would not need post-processing since the addition of the constant to each one of the data items of the vector is an independent process (i.e. it does not rely on the results of the additions to other data items of the vector). However, other operations do require post-processing. For example, an operation to perform a dot product of two vectors would require some post-processing because the operation cannot be independently performed for each of the data items of the vector to determine the result of the dot product.

If post-processing is to be performed then the method passes to step S216 in which the post-processing is performed. The details of the manner in which the post-processing is performed are beyond the scope of this description, but it is noted that the post-processing may be performed by a different processing unit (i.e. not by the SIMD processing module 102. The data items of the vector which is the result of the execution of the instructions on the vectors at the SIMD processing module 102 are stored in the registers (110₀ to 110₃) and may be passed from the registers to another processing module (not shown in Figure 1) for performing the post-processing.

The method passes from step S216 to step S218. Furthermore, it is noted that if there is no post-processing to be performed, the method passes from step S214 to step S218. In step S218 the control unit 112 determines whether there is another operation (comprising a set of one or more instructions) to execute. If there is, then the method passes back to step S204 and the method repeats to thereby execute the next instruction(s) on the appropriate vector(s) using the vector processing units 108 of the SIMD processing module 102.

Therefore, the control unit 112 causes a next set of instructions to be executed in response to the loop counters reaching zero for all of the vector processing units (108₀ to 108₃) for a current set of instructions (once any post-processing on the result of the current set of instructions has been performed, if appropriate).

If the control unit 112 determines, in step S218, that there are no more instructions to execute then the method ends at S220.

Therefore, the methods described herein allow instructions to be executed on many data items of a vector in parallel, e.g. on nxN data items concurrently using N vector processing units which are each n-way vector processing units. This is achievable even when the instructions are written to be executed on an n-way vector processing unit, because the control unit 112 determines the vector position indications (e.g. Ind₀ to Ind₃) to indicate different parts (or "subvectors") of the vector on which the different vector processing units 108 should execute the instructions. Each of the vector processing units 108 is configured to execute instructions on parts of vectors independently of the other vector processing units 108 of the SIMD processing module 102, so they can operate in parallel with each other on different sections (subvectors) of the vectors. It is noted that a SIMD processing module including an 8-way vector processing unit could not execute an instruction that was written for execution on a 4-way vector processing unit on 8 data items at a time because the instruction implicitly involves executing instructions on 4 data items at a time and then repeating the execution for the next 4 data items. Furthermore, having multiple separate vector processing units with respective sets of registers keeps the routing simple between the different ways of a vector processing unit and the appropriate registers, compared to having a single wide vector processing unit routing to a set of registers. This makes the SIMD processing module 102 easier to design and implement (i.e. manufacture) in a chip compared to a SIMD processing module which includes fewer, wider vector processing units. It also allows the design to be scaled easily by adding more, or less, vector processing units as required for a given implementation.

Furthermore, the use of a SIMD processing module 102 including multiple vector processing units allows the control unit 112 to receive an instruction to be implemented on a vector and to manage the assignment of the different subvectors to the respective vector processing units. This makes a system including the SIMD processing module 102 simpler to operate compared to a system which includes multiple SIMD processing modules each with a single vector processing unit because the program providing the instructions does not need to assess the partitioning of which parts of the vectors should be provided to which of the SIMD processing modules, as this is done by the control unit 112.

The number (N) of vector processing units 108 in the SIMD processing module 102 can be different in different examples. This makes the SIMD processing module 102 very flexible in the use to which it can be put. For example, if the SIMD processing module 102 is intended for use in a system where the speed with which instructions are executed on large vectors is important, but where the area and cost of the SIMD processing module 102 are not so important (e.g. in a high performance computing system) then the number (N) of vector processing units can be increased, e.g. to 8, 16 or more. Conversely, if the SIMD processing module 102 is intended for use in a system where the speed with which instructions are executed is not important, but where the area and cost of the SIMD processing module 102 are important (e.g. in a computing system for use in a low-cost device or a mobile device such as a smart phone or tablet) then the number (N) of vector processing units can be decreased, e.g. to 3 or less. For a design where there is an upper limit on the number of cycles that can be executed per second (for example in order to minimise power consumption, or due to other constraints) then the number (N) of vector processing units can be increased in order to allow the required processing capacity.

In the main examples described herein the instructions are executed by all of the N vector processing units (108₀ to 108_{N-1}) of the SIMD processing module 102. However, in other examples, a plurality of the vector processing units in the SIMD processing module, but not all of the vector processing units of the SIMD processing module may be used to execute instructions on vectors. This may help to reduce the power consumption of the SIMD processing module 102. In these other examples, the control unit 112 may determine which of the N vector processing units are to be included in a plurality of vector processing units which are used to execute the instructions on the vectors. The control unit may perform this determination based on at least one of: (i) the number of data items in the vectors, (ii) the number (N) of vector processing units in the SIMD processing module 102, and (iii) the width of the vector processing units (i.e. the value of n). For example, if the vectors include only 16 data items, if there are eight vector processing units 108 in the SIMD processing module 102 (i.e. if N=8), and if each of the vector processing units are 4-way vector processing units (i.e. if n=4), then the control unit 112 may determine that only four of the eight vector processing units in the SIMD processing module 102 are included in the plurality of vector processing units which are used to execute instructions on the data items of the vectors.

In the examples described above, the operations include multiple instructions. In other examples an operation may include just one instruction, and in general an operation includes a set of one or more instructions.

In the examples, described above the instructions are executed on multiple vectors. In other examples, the instructions might be executed on just one vector, and in general the instructions are executed on a set of one or more vectors.

In the examples described above the vector position indications (Ind₀ to Ind₃) indicate starting positions of parts of a vector. In other embodiments, the vector position indications may indicate the positions of the parts in a different way, e.g. by indicating a different predetermined position of the parts, e.g. the end or the centre of the parts within the vectors.

In the examples described above, all of the vector processing units 108 in the SIMD processing module 102 have the same width as each other, i.e. they are all n-way vector processing units. In other examples, some of the vector processing units may have different widths to other ones of the vector processing units in the SIMD processing module. In these examples, if an instruction is arranged to be executed by one or more n-way vector processing units then the control unit 112 may cause those instructions to be executed by a set of n-way vector processing units in the SIMD processing module, whereas if an instruction is arranged to be executed by one or more m-way vector processing units (where n≠m) then the control unit 112 may cause those instructions to be executed by a set of m-way vector processing units in the SIMD processing module. This provides more flexibility to the SIMD processing module in the sense that different types of instructions can be executed by the SIMD processing module, but it may result in a more expensive and larger SIMD processing module. For example, one or more narrow processing units could be included in the SIMD processing module for efficiently processing scalars.

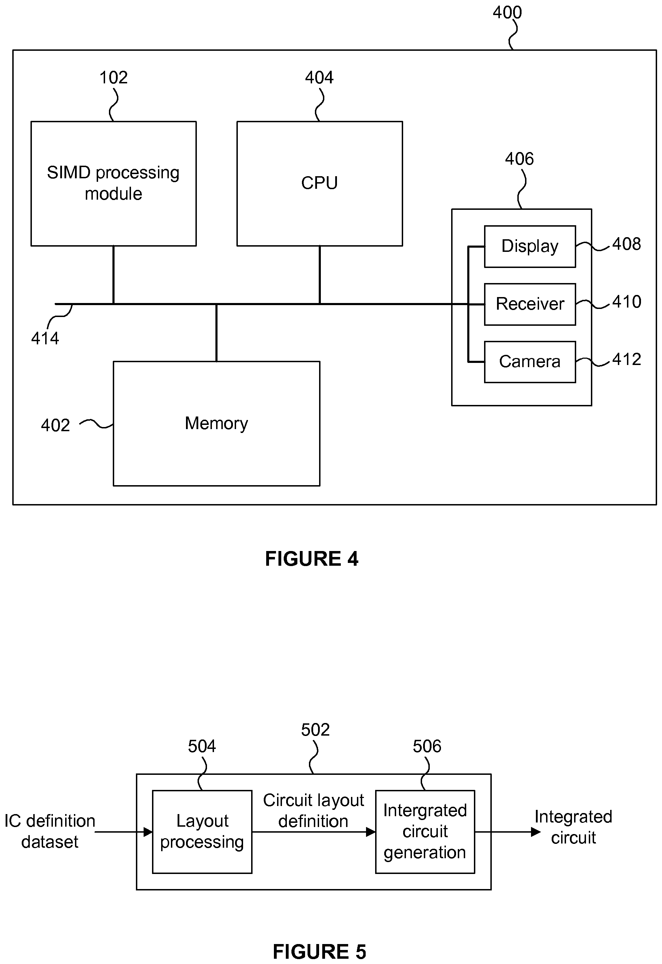

The SIMD processing module 102 described above can be implemented in a wider computer system. For example, Figure 4 shows a computer system 400 which comprises the SIMD processing module 102, a memory 402 (which may include the memories 104 and 106 described above) and a Central Processing Unit (CPU) 404. The computer system 400 also comprises other devices 406, such as a display 408, receiver 410 and a camera 412. The components of the computer system can communicate with each other via a communications bus 414. In an example, the computer system 400 may be implemented in a device such as a mobile phone, tablet, laptop, television or any other suitable device. In an example, the receiver 410 may be configured to receive signals and to pass them to the CPU 404, wherein the CPU 404 can be configured to process the signals. The CPU 404 may be arranged to offload operations to the SIMD processing module 102, e.g. if the operations include instructions that are suited for execution on multiple data items in parallel.

Generally, any of the functions, methods, techniques or components described above (e.g. the control unit 112) can be implemented in modules using software, firmware, hardware (e.g., fixed logic circuitry), or any combination of these implementations. The terms "module," "functionality," "component", "block", "unit" and "logic" are used herein to generally represent software, firmware, hardware, or any combination thereof. In preferred embodiments, the memories 104 and 106, the vector processing units 108 and the sets of registers 110 are implemented in hardware.

In the case of a software implementation of the control unit 112, the control unit represents program code that performs specified tasks when executed on a processor. In one example, the control unit described may be performed by a computer configured with software in machine readable form stored on a computer-readable medium. One such configuration of a computer-readable medium is signal bearing medium and thus is configured to transmit the instructions (e.g. as a carrier wave) to the computing device, such as via a network. The computer-readable medium may also be configured as a non-transitory computer-readable storage medium and thus is not a signal bearing medium. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The software may be in the form of a computer program comprising computer program code for configuring a computer to perform the constituent portions of described methods or in the form of a computer program comprising computer program code means adapted to perform all the steps of any of the methods described herein when the program is run on a computer and where the computer program may be embodied on a computer readable medium. The program code can be stored in one or more computer readable media. The features of the techniques described herein are platform-independent, meaning that the techniques may be implemented on a variety of computing platforms having a variety of processors.

Those skilled in the art will also realize that all, or a portion of the functionality, techniques or methods described herein may be carried out by a dedicated circuit, an application-specific integrated circuit, a programmable logic array, a field-programmable gate array, or the like. For example, the module, functionality, component, unit or logic (e.g. the SIMD processing module 102 and its components) may comprise hardware in the form of circuitry. Such circuitry may include transistors and/or other hardware elements available in a manufacturing process. Such transistors and/or other elements may be used to form circuitry or structures that implement and/or contain memory, such as registers, flip flops, or latches, logical operators, such as Boolean operations, mathematical operators, such as adders, multipliers, or shifters, and interconnects, by way of example. Such elements may be provided as custom circuits or standard cell libraries, macros, or at other levels of abstraction. Such elements may be interconnected in a specific arrangement. The module, functionality, component, unit or logic (e.g. the components of the SIMD processing module 102) may include circuitry that is fixed function and circuitry that can be programmed to perform a function or functions; such programming may be provided from a firmware or software update or control mechanism. In an example, hardware logic has circuitry that implements a fixed function operation, state machine or process.

It is also intended to encompass software which "describes" or defines the configuration of hardware that implements a module, functionality, component, unit or logic (e.g. the components of the SIMD processing module 102) described above, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed in an integrated circuit manufacturing system configures the system to manufacture a SIMD processing module configured to perform any of the methods described herein, or to manufacture a SIMD processing module comprising any apparatus described herein. The IC definition dataset may be in the form of computer code, e.g. written in a suitable HDL such as register-transfer level (RTL) code. An example of processing an integrated circuit definition dataset at an integrated circuit manufacturing system so as to configure the system to manufacture a SIMD processing module will now be described with respect to Figure 5.

Figure 5 shows an example of an integrated circuit (IC) manufacturing system 502 which comprises a layout processing system 504 and an integrated circuit generation system 506. The IC manufacturing system 502 is configured to receive an IC definition dataset (e.g. defining a SIMD processing module as described in any of the examples herein), process the IC definition dataset, and generate an IC according to the IC definition dataset (e.g. which embodies a SIMD processing module as described in any of the examples herein). The processing of the IC definition dataset configures the IC manufacturing system 502 to manufacture an integrated circuit embodying a SIMD processing module as described in any of the examples herein. More specifically, the layout processing system 504 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 504 has determined the circuit layout it may output a circuit layout definition to the IC generation system 506. The IC generation system 506 generates an IC according to the circuit layout definition, as is known in the art. For example, the IC generation system 506 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 506 may be in the form of computer-readable code which the IC generation system 506 can use to form a suitable mask for use in generating an IC. The different processes performed by the IC manufacturing system 502 may be implemented all in one location, e.g. by one party. Alternatively, the IC manufacturing system 502 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a SIMD processing module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some examples, an integrated circuit definition dataset could include software which runs on hardware defined by the dataset or in combination with hardware defined by the dataset. In the example shown in Figure 5, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The term 'processor' and 'computer' are used herein to refer to any device, or portion thereof, with processing capability such that it can execute instructions, or a dedicated circuit capable of carrying out all or a portion of the functionality or methods, or any combination thereof.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. It will be understood that the benefits and advantages described above may relate to one example or may relate to several examples.

Any range or value given herein may be extended or altered without losing the effect sought, as will be apparent to the skilled person. The steps of the methods described herein may be carried out in any suitable order, or simultaneously where appropriate. Aspects of any of the examples described above may be combined with aspects of any of the other examples described to form further examples without losing the effect sought.

## Claims

1. A SIMD processing module (102) comprising:
two or more vector processing units (108); and
a control unit (112) configured to:
receive (S202) a set of one or more instructions to be executed by each of a plurality of the vector processing units (108), wherein the set of one or more instructions are to be executed by each vector processing unit on a respective subvector of one or more vectors, wherein each respective subvector is a section within a vector, and wherein each of the plurality of vector processing units (108) is an n-way vector processing unit (108) configured to execute an instruction on n data items of a subvector in parallel, the instructions being arranged to be executed by each vector processing unit (108) so that the set of one or more instructions are executed on n data items of its respective subvector in a first cycle and on the next n data items of its respective subvector in a second cycle;
for each of the plurality of the vector processing units (108), determine (S204) a respective vector position indication (Ind) which indicates a position of the subvector within the one or more vectors on which the vector processing unit (108) is to execute the set of one or more instructions; and
cause the plurality of n-way vector processing units (108) to execute (S208) the set of one or more instructions on subvectors of the one or more vectors in accordance with the vector position indications (Ind);
wherein each of the plurality of vector processing units (108) is configured to, on each cycle, execute the set of one or more instructions on n data items in parallel from the respective subvector.

2. The SIMD processing module (102) of claim 1 wherein the vector position indications (Ind) indicate starting positions of the subvectors within the one or more vectors.

3. The SIMD processing module (102) of any preceding claim wherein the control unit (112) is configured to determine the positions of the subvectors within the one or more vectors based on: (i) the length of the one or more vectors, and (ii) the number of vector processing units (108) in said plurality of vector processing units (108).

4. The SIMD processing module (102) of any preceding claim wherein the control unit (112) is configured to determine the positions of the subvectors within the one or more vectors such that differences in the sizes of the different subvectors do not exceed the widths of the vector processing units (108).

5. The SIMD processing module (102) of any preceding claim further comprising, for each of the vector processing units (108), a respective set of registers (110).

6. The SIMD processing module (102) of claim 5 wherein the control unit (112) is configured to cause the plurality of vector processing units (108) to execute the set of one or more instructions on subvectors of the one or more vectors in accordance with the vector position indications (Ind) by initialising the set of registers (110) for each of the plurality of vector processing units in accordance with the respective vector position indications (Ind).

7. The SIMD processing module (102) of any preceding claim wherein said one or more instructions of the set are arranged to be executed by n-way vector processing units (108) such that the one or more instructions of the set are executed on n data items of a vector by each of the plurality of vector processing units (108) and then the execution of the one or more instructions of the set is repeated for the next n data items by each of the plurality of vector processing units (108).

8. The SIMD processing module (102) of claim 7 wherein for each of said subvectors of the one or more vectors, the number of data items included in that subvector is a multiple of n.

9. The SIMD processing module (102) of any preceding claim wherein the control unit (112) is configured to determine (S206) a respective loop counter (LC) for each of the plurality of vector processing units (108) which indicates the number of cycles that the vector processing unit is to perform in order to execute the set of one or more instructions on the subvector of the one or more vectors on which the vector processing unit (108) is to execute the set of one or more instructions, wherein the vector processing unit (108) is configured to, on each cycle, execute the set of one or more instructions on n data items from the subvector of the one or more vectors and decrement (S210) its loop counter (LC).

10. The SIMD processing module (102) of claim 9 wherein the control unit (112) is configured to cause (S218) a next set of one or more instructions to be executed in response to the loop counters (LC) reaching zero for all of the plurality of vector processing units (108) for a current set of one or more instructions.

11. The SIMD processing module (102) of any preceding claim wherein said plurality of vector processing units (108) includes all of said two or more vector processing units (108).

12. The SIMD processing module (102) of any of claims 1 to 10 wherein said plurality of n-way vector processing units includes some but not all of said two or more vector processing units (108), and wherein the control unit (112) is further configured to determine which of the two or more vector processing units (108) are to be included in said plurality of vector processing units (108) which are to be used to execute the set of one or more instructions on the one or more vectors, based on at least one of: (i) the number of data items in the one or more vectors, (ii) the number of vector processing units (108) in the SIMD processing module (102), and (iii) the width of the vector processing units (108).

13. A method of executing a set of one or more instructions on one or more vectors using a plurality of n-way vector processing units (108) of a SIMD processing module (102) each configured to execute an instruction on n data items in parallel, wherein each of the plurality of the vector processing units (108) executes the set of one or more instructions on a respective subvector of the one or more vectors, wherein each respective subvector is a section within a vector, the instructions are arranged to be executed by each vector processing unit (108) so that the set of one or more instructions are executed on n data items of its respective subvector in a first cycle and on the next n data items of its respective subvector in a second cycle, the method comprising:
for each of the plurality of the vector processing units (108), determining (S204) a respective vector position indication (Ind) which indicates a position of the subvector within each of the one or more vectors on which the vector processing unit (108) is to execute the set of one or more instructions, and
executing (S208) the set of one or more instructions on subvectors of the one or more vectors using the plurality of vector processing units (108) in accordance with the vector position indications (Ind), wherein on each cycle, each of the vector processing units (108) executes the set of one or more instructions on n data items in parallel from the respective subvector.

14. A computer readable storage medium having stored thereon a computer readable description of an integrated circuit that, when processed in an integrated circuit manufacturing system (502), causes the integrated circuit manufacturing system (502) to manufacture a SIMD processing module (102) as claimed in any of claims 1 to 12.

## Patentansprüche

1. SIMD-Verarbeitungsmodul (102), umfassend:
zwei oder mehr Vektorverarbeitungseinheiten (108); und
eine Steuerungseinheit (112), die konfiguriert ist, um:
eine Gruppe von einer oder mehreren Anweisungen zu empfangen (S202), die von jeder einer Vielzahl der Vektorverarbeitungseinheiten (108) auszuführen sind, wobei die Gruppe von einer oder mehreren Anweisungen von jeder Vektorverarbeitungseinheit auf einem entsprechenden Subvektor eines oder mehrerer Vektoren auszuführen ist, wobei jeder entsprechende Subvektor ein Abschnitt innerhalb eines Vektors ist und wobei jede der Vielzahl von Vektorverarbeitungseinheiten (108) eine n-Wege-Vektorverarbeitungseinheit (108) ist, die konfiguriert ist, um eine Anweisung auf n Datenfeldern eines Subvektors parallel auszuführen, wobei die Anweisungen angeordnet sind, um von jeder Vektorverarbeitungseinheit (108) ausgeführt zu werden, sodass die Gruppe von einer oder mehreren Anweisungen auf n Datenfeldern des entsprechenden Subvektors in einem ersten Zyklus und auf den nächsten n Datenfeldern des entsprechenden Subvektors in einem zweiten Zyklus ausgeführt wird;
für jede der Vielzahl der Vektorverarbeitungseinheiten (108) eine entsprechende Vektorpositionsanzeige (Ind) zu bestimmen (S204), die eine Position des Subvektors innerhalb des einen oder der mehreren Vektoren anzeigt, auf der die Vektorverarbeitungseinheit (108) die Gruppe von einer oder mehreren Anweisungen auszuführen hat; und
zu bewirken, dass die Vielzahl von n-Wege-Vektorverarbeitungseinheiten (108) die Gruppe von einer oder mehreren Anweisungen auf Subvektoren des einen oder der mehreren Vektoren in Übereinstimmung mit den Vektorpositionsanzeigen (Ind) ausführt (S208);
wobei jede der Vielzahl von Vektorverarbeitungseinheiten (108) konfiguriert ist, um in jedem Zyklus die Gruppe von einer oder mehreren Anweisungen auf n Datenfeldern von dem entsprechenden Subvektor parallel auszuführen.

2. SIMD-Verarbeitungsmodul (102) nach Anspruch 1, wobei die Vektorpositionsanzeigen (Ind) Startpositionen der Subvektoren innerhalb des einen oder der mehreren Vektoren anzeigen.

3. SIMD-Verarbeitungsmodul (102) nach einem vorstehenden Anspruch, wobei die Steuerungseinheit (112) konfiguriert ist, um die Positionen der Subvektoren innerhalb des einen oder der mehreren Vektoren basierend auf: (i) der Länge des einen oder der mehreren Vektoren und (ii) der Anzahl von Vektorverarbeitungseinheiten (108) in der Vielzahl von Vektorverarbeitungseinheiten (108) zu bestimmen.

4. SIMD-Verarbeitungsmodul (102) nach einem vorstehenden Anspruch, wobei die Steuerungseinheit (112) konfiguriert ist, um die Positionen der Subvektoren innerhalb des einen oder der mehreren Vektoren zu bestimmen, sodass Unterschiede bei der Größe der verschiedenen Subvektoren nicht über die Breiten der Vektorverarbeitungseinheiten (108) hinaus gehen.

5. SIMD-Verarbeitungsmodul (102) nach einem vorstehenden Anspruch, weiter umfassend für jede der Vektorverarbeitungseinheiten (108) eine entsprechende Gruppe von Registern (110).

6. SIMD-Verarbeitungsmodul (102) nach Anspruch 5, wobei die Steuerungseinheit (112) konfiguriert ist, um zu bewirken, dass die Vielzahl von Vektorverarbeitungseinheiten (108) die Gruppe von einer oder mehreren Anweisungen auf Subvektoren des einen oder der mehreren Vektoren in Übereistimmung mit den Vektorpositionsanzeigen (Ind) durch Initialisieren der Gruppe von Registern (110) für jede der Vielzahl von Vektorverarbeitungseinheiten in Übereinstimmung mit den entsprechenden Vektorpositionsanzeigen (Ind) ausführt.

7. SIMD-Verarbeitungsmodul (102) nach einem vorstehenden Anspruch, wobei die eine oder die mehreren Anweisungen der Gruppe angeordnet sind, um durch n-Wege-Vektorverarbeitungseinheiten (108) ausgeführt zu werden, sodass die eine oder die mehreren Anweisungen der Gruppe auf n Datenfeldern eines Vektors durch jede der Vielzahl von Vektorverarbeitungseinheiten (108) ausgeführt werden und die Ausführung der einen oder der mehreren Anweisungen der Gruppe anschließend für die nächsten n Datenfelder durch jede der Vielzahl von Vektorverarbeitungseinheiten (108) wiederholt wird.

8. SIMD-Verarbeitungsmodul (102) nach Anspruch 7, wobei für jeden der Subvektoren des einen oder der mehreren Vektoren die Anzahl der in diesem Subvektor eingeschlossenen Datenfelder ein Vielfaches von n ist.

9. SIMD-Verarbeitungsmodul (102) nach einem vorstehenden Anspruch, wobei die Steuerungseinheit (112) konfiguriert ist, um einen entsprechenden Schleifenzähler (loop counter) (LC) für jede der Vielzahl von Vektorverarbeitungseinheiten (108) zu bestimmen (S206), der die Anzahl der Zyklen anzeigt, die die Vektorverarbeitungseinheit durchzuführen hat, um die Gruppe von einer oder mehreren Anweisungen auf dem Subvektor des einen oder der mehreren Vektoren auszuführen, auf dem die Vektorverarbeitungseinheit (108) die Gruppe von einer oder mehreren Anweisungen auszuführen hat, wobei die Vektorverarbeitungseinheit (108) konfiguriert ist, um in jedem Zyklus die Gruppe von einer oder mehreren Anweisungen auf n Datenfeldern von dem Subvektor des einen oder der mehreren Vektoren auszuführen und seinen Schleifenzähler (LC) herunterzuzählen.

10. SIMD-Verarbeitungsmodul (102) nach Anspruch 9, wobei die Steuerungseinheit (112) konfiguriert ist, um zu bewirken (S218), dass eine nächste Gruppe von einer oder mehreren Anweisungen in Reaktion darauf ausgeführt wird, dass die Schleifenzähler (LC) für alle der Vielzahl von Vektorverarbeitungseinheiten (108) für eine aktuelle Gruppe von einer oder mehreren Anweisungen null erreichen.

11. SIMD-Verarbeitungsmodul (102) nach einem vorstehenden Anspruch, wobei die Vielzahl von Vektorverarbeitungseinheiten (108) alle der zwei oder mehr Vektorverarbeitungseinheiten (108) einschließt.

12. SIMD-Verarbeitungsmodul (102) nach einem der Ansprüche 1 bis 10, wobei die Vielzahl von n-Wege-Vektorverarbeitungseinheiten einige, aber nicht alle der zwei oder mehr Vektorverarbeitungseinheiten (108) einschließt und wobei die Steuerungseinheit (112) weiter konfiguriert ist, um zu bestimmen, welche der zwei oder mehr Vektorverarbeitungseinheiten (108) in die Vielzahl von Vektorverarbeitungseinheiten (108) einzuschließen sind, die dazu verwendet werden soll, um die Gruppe von einer oder mehreren Anweisungen auf dem einen oder den mehreren Vektoren basierend auf einem von: (i) der Anzahl von Datenfeldern in dem einen oder den mehreren Vektoren, (ii) der Anzahl von Vektorverarbeitungseinheiten (108) in dem SIMD-Verarbeitungsmodul (102) und (iii) der Breite der Vektorverarbeitungseinheiten (108) auszuführen.

13. Verfahren zum Ausführen einer Gruppe von einer oder mehreren Anweisungen auf einem oder mehreren Vektoren unter Verwendung einer Vielzahl von n-Wege-Vektorverarbeitungseinheiten (108) eines SIMD-Verarbeitungsmoduls (102), die jeweils konfiguriert sind, um eine Anweisung auf n Datenfeldern parallel auszuführen, wobei jede der Vielzahl von Vektorverarbeitungseinheiten (108) die Gruppe von einer oder mehreren Anweisungen auf einem entsprechenden Subvektor des einen oder der mehreren Vektoren ausführt, wobei jeder entsprechende Subvektor ein Abschnitt innerhalb eines Vektors ist, wobei die Anweisungen angeordnet sind, um von jeder Vektorverarbeitungseinheit (108) ausgeführt zu werden, sodass die Gruppe von einer oder mehreren Anweisungen auf n Datenfeldern des entsprechenden Subvektors in einem ersten Zyklus und auf den nächsten n Datenfeldern des entsprechenden Subvektors in einem zweiten Zyklus ausgeführt wird, wobei das Verfahren Folgendes umfasst:
für jede der Vielzahl von Vektorverarbeitungseinheiten (108) Bestimmen (S204) einer entsprechenden Vektorpositionsanzeige (Ind), die eine Position des Subvektors innerhalb jedes des einen oder der mehreren Vektoren bestimmt, auf der die Vektorverarbeitungseinheit (108) die Gruppe von einer oder mehreren Anweisungen ausführen soll, und
Ausführen (S208) der Gruppe von einer oder mehreren Anweisungen auf Subvektoren des einen oder der mehreren Vektoren unter Verwendung der Vielzahl von Vektorverarbeitungseinheiten (108) in Übereinstimmung mit den Vektorpositionsanzeigen (Ind), wobei in jedem Zyklus jede der Vektorverarbeitungseinheiten (108) die Gruppe von einer oder mehreren Anweisungen auf n Datenfeldern von dem entsprechenden Subvektor parallel ausführt.

14. Computerlesbares Speichermedium, auf dem eine computerlesbare Beschreibung eines Schaltkreises gespeichert ist und das bei Verarbeitung in einem System zur Erzeugung von Schaltkreisen (502) bewirkt, dass das System zur Erzeugung von Schaltkreisen (502) ein SIMD-Verarbeitungsmodul (102) nach einem der Ansprüche 1 bis 12 erzeugt.

## Revendications

1. Module de traitement SIMD (102) comprenant :
deux unités de traitement de vecteurs (108) ou plus ; et
une unité de commande (112) configurée pour :
recevoir (S202) un ensemble d'une ou plusieurs instructions à exécuter par chacun d'une pluralité des unités de traitement de vecteurs (108), dans lequel l'ensemble d'une ou plusieurs instructions doivent être exécutées par chaque unité de traitement de vecteurs sur un sous-vecteur respectif d'un ou plusieurs vecteurs, dans lequel chaque sous-vecteur respectif est une section au sein d'un vecteur, et dans lequel chacun de la pluralité d'unités de traitement de vecteurs (108) est une unité de traitement de vecteurs à n voies (108) configurée pour exécuter une instruction sur n éléments de données d'un sous-vecteur en parallèle, les instructions étant agencées pour être exécutées par chaque unité de traitement de vecteurs (108) de sorte que l'ensemble d'une ou plusieurs instructions sont exécutées sur n éléments de données de son sous-vecteur respectif dans un premier cycle et sur les n éléments de données suivants de son sous-vecteur respectif dans un second cycle ;
pour chacune de la pluralité des unités de traitement de vecteurs (108), déterminer (S204) une indication de position de vecteur respective (Ind) qui indique une position du sous-vecteur au sein des un ou plusieurs vecteurs sur lesquels l'unité de traitement de vecteurs (108) doit exécuter l'ensemble d'une ou plusieurs instructions ; et
amener la pluralité d'unités de traitement de vecteurs à n voies (108) à exécuter (S208) l'ensemble d'une ou plusieurs instructions sur des sous-vecteurs des un ou plusieurs vecteurs conformément aux indications de positions de vecteurs (Ind) ;
dans lequel chacune de la pluralité d'unités de traitement de vecteurs (108) est configurée pour, sur chaque cycle, exécuter l'ensemble d'une ou plusieurs instructions sur n éléments de données en parallèle à partir du sous-vecteur respectif.

2. Module de traitement SIMD (102) selon la revendication 1 dans lequel les indications de positions de vecteurs (Ind) indiquent des positions initiales des sous-vecteurs au sein des un ou plusieurs vecteurs.

3. Module de traitement SIMD (102) selon une quelconque revendication précédente dans lequel l'unité de commande (112) est configurée pour déterminer les positions des sous-vecteurs au sein des un ou plusieurs vecteurs sur la base : (i) de la longueur des un ou plusieurs vecteurs, et (ii) du nombre d'unités de traitement de vecteurs (108) dans ladite pluralité d'unités de traitement de vecteurs (108).

4. Module de traitement SIMD (102) selon une quelconque revendication précédente dans lequel l'unité de commande (112) est configurée pour déterminer les positions des sous-vecteurs au sein des un ou plusieurs vecteurs de telle sorte que des différences dans les tailles des différents sous-vecteurs ne dépassent pas les largeurs des unités de traitement de vecteurs (108).

5. Module de traitement SIMD (102) selon une quelconque revendication précédente comprenant en outre, pour chacune des unités de traitement de vecteurs (108), un ensemble respectif de registres (110).

6. Module de traitement SIMD (102) selon la revendication 5 dans lequel l'unité de commande (112) est configurée pour amener la pluralité d'unités de traitement de vecteurs (108) à exécuter l'ensemble d'une ou plusieurs instructions sur des sous-vecteurs des un ou plusieurs vecteurs conformément aux indications de positions de vecteurs (Ind) en initialisant l'ensemble de registres (110) pour chacune de la pluralité d'unités de traitement de vecteurs conformément aux indications de positions de vecteurs respectives (Ind).

7. Module de traitement SIMD (102) selon une quelconque revendication précédente dans lequel lesdites une ou plusieurs instructions de l'ensemble sont agencées pour être exécutées par des unités de traitement de vecteurs à n voies (108) de telle sorte que les une ou plusieurs instructions de l'ensemble sont exécutées sur n éléments de données par chacune de la pluralité d'unités de traitement de vecteurs (108) puis l'exécution des une ou plusieurs instructions de l'ensemble est répétée pour les n éléments de données par chacune de la pluralité d'unités de traitement de vecteurs (108).

8. Module de traitement SIMD (102) selon la revendication 7 dans lequel pour chacun desdits sous-vecteurs des un ou plusieurs vecteurs, le nombre d'éléments de données inclus dans ce sous-vecteur est un multiple de n.

9. Module de traitement SIMD (102) selon une quelconque revendication précédente dans lequel l'unité de commande (112) est configurée pour déterminer (S206) un compteur de boucles respectif (LC) pour chacune de la pluralité d'unités de traitement de vecteurs (108) qui indique le nombre de cycles que l'unité de traitement de vecteurs doit réaliser afin d'exécuter l'ensemble d'une ou plusieurs instructions sur le sous-vecteur des un ou plusieurs vecteurs sur lesquels l'unité de traitement de vecteurs (108) doit exécuter l'ensemble d'une ou plusieurs instructions, dans lequel l'unité de traitement de vecteurs (108) est configurée pour, sur chaque cycle, exécuter l'ensemble d'une ou plusieurs instructions sur n éléments de données en provenance du sous-vecteur des un ou plusieurs vecteurs et décrémenter (S210) son compteur de boucles (LC).

10. Module de traitement SIMD (102) selon la revendication 9 dans lequel l'unité de commande (112) est configurée pour amener (S218) un ensemble suivant d'une ou plusieurs instructions à être exécuté en réponse aux compteurs de boucles (LC) atteignant zéro pour la totalité de la pluralité d'unités de traitement de vecteurs (108) pour un ensemble actuel d'une ou plusieurs instructions.

11. Module de traitement SIMD (102) selon une quelconque revendication précédente dans lequel ladite pluralité d'unités de traitement de vecteurs (108) incluent la totalité desdites deux unités de traitement de vecteurs (108) ou plus.

12. Module de traitement SIMD (102) selon l'une quelconque des revendications 1 à 10 dans lequel ladite pluralité d'unités de traitement de vecteurs à n voies incluent une partie mais pas la totalité des lesdites deux unités de traitement de vecteurs (108) ou plus, et dans lequel l'unité de commande (112) est en outre configurée pour déterminer lesquelles des deux unités de traitement de vecteurs (108) ou plus doivent être incluses dans ladite pluralité d'unités de traitement de vecteurs (108) qui doivent être utilisées pour exécuter l'ensemble d'une ou plusieurs instructions sur les un ou plusieurs vecteurs, sur la base d'au moins l'un parmi : (i) le nombre d'éléments de données dans les un ou plusieurs vecteurs, (ii) le nombre d'unités de traitement de vecteurs (108) dans le module de traitement SIMD (102), et (iii) la largeur des unités de traitement de vecteurs (108).

13. Procédé d'exécution d'un ensemble d'une ou plusieurs instructions sur un ou plusieurs vecteurs à l'aide d'une pluralité d'unités de traitement de vecteurs à n voies (108) d'un module de traitement SIMD (102) configurées chacune pour exécuter une instruction sur n éléments de données en parallèle, dans lequel chacune de la pluralité des unités de traitement de vecteurs (108) exécute l'ensemble d'une ou plusieurs instructions sur un sous-vecteur respectif des un ou plusieurs vecteurs, dans lequel chaque sous-vecteur respectif est une section au sein d'un vecteur, les instructions sont agencées pour être exécutées par chaque unité de traitement de vecteurs (108) de sorte que l'ensemble d'une ou plusieurs instructions sont exécutées sur n éléments de données de son sous-vecteur respectif dans un premier cycle et sur les n éléments de données suivants de son sous-vecteur respectif dans un second cycle, le procédé comprenant :
pour chacune de la pluralité des unités de traitement de vecteurs (108), la détermination (S204) d'une indication de position de vecteur respective (Ind) qui indique une position du sous-vecteur au sein de chacun des un ou plusieurs vecteurs sur lesquels l'unité de traitement de vecteurs (108) doit exécuter l'ensemble d'une ou plusieurs instructions, et
l'exécution (S208) de l'ensemble d'une ou plusieurs instructions sur des sous-vecteurs des un ou plusieurs vecteurs à l'aide de la pluralité d'unités de traitement de vecteurs (108) conformément aux indications de positions de vecteurs (Ind), dans lequel sur chaque cycle, chacune des unités de traitement de vecteurs (108) exécute l'ensemble d'une ou plusieurs instructions sur n éléments de données en parallèle à partir du sous-vecteur respectif.

14. Support de stockage lisible sur ordinateur présentant, stockée sur celui-ci, une description lisible sur ordinateur d'un circuit intégré qui, lorsqu'il est traité dans un système de fabrication de circuits intégrés (502), amène le système de fabrication de circuits intégrés (502) à fabriquer un module de traitement SIMD (102) selon l'une quelconque des revendications 1 à 12.
